# FASCICULE DE BREVET EUROPEEN

(11) **EP 4 067 269 B1**
(45) Date de publication et mention de la délivrance du brevet: **23.08.2023**
(21) Numéro de dépôt: 22163422.3
(22) Date de dépôt: 22.03.2022
(51) Int. Cl.: B65G 47/86

(54) **UNITE DE CONVOYAGE D'ARTICLES COMPRENANT DES DISPOSITIFS DE TRANSFERT A BRAS EXTENSIBLE**
EINHEIT ZUM BEFÖRDERN VON GEGENSTÄNDEN MIT TRANSFERVORRICHTUNGEN MIT AUSFAHRBAREM ARM
UNIT FOR TRANSPORTING ITEMS COMPRISING TRANSFER DEVICES WITH EXTENDABLE ARM

(30) Priorité: 29.03.2021 FR 2103198
(43) Date de publication de la demande: 05.10.2022
(73) Titulaire: Sidel Participations, 76930 Octeville-sur-Mer (FR)
(72) Inventeur: DUCLOS, Yves-Alban, 76930 OCTEVILLE-SUR-MER (FR); SAVARY, Cyrille, 76930 OCTEVILLE-SUR-MER (FR); RAGON, Emmanuel, 76930 OCTEVILLE-SUR-MER (FR); LEMONNIER, Christophe, 76930 OCTEVILLE-SUR-MER (FR)
(74) Mandataire: Sidel Group

(56) Documents cités:
- WO-A1-2011/001356
- DE-A1-102015 110 462
- FR-A1- 2 796 591
- FR-A1- 2 802 191

## Description

Le domaine de l'invention est celui de la conception et de la fabrication des systèmes convoyage d'articles.

Plus précisément, l'invention concerne une unité de convoyage d'articles, comportant un support qui est entraîné en rotation de manière continue autour d'un axe principal de rotation, et qui porte des dispositifs de transfert.

Chaque dispositif de transfert comprend un bras de type extensible, ayant une partie radiale interne fixée sur le support et une partie radiale externe coulissante par rapport à la partie radiale interne, dans un plan transversal à l'axe principal de rotation. L'élongation du bras est commandée par un système à cames.

Le document de brevet publié sous le numéro FR 2 802 191 décrit plus précisément une telle unité de transfert.

Cette unité de transfert comprend :
- un bâti définissant l'axe principal de rotation et présentant un premier chemin de came et un deuxième chemin de came ;
- un support monté à rotation sur le bâti par rapport à l'axe principal de rotation, et
- au moins un dispositif de transfert monté sur le support.

Chaque dispositif de transfert comprend, en plus du bras extensible tel que précédemment décrit :
- une pince montée à rotation sur la partie radiale externe du bras selon un axe secondaire de rotation parallèle à l'axe principal de rotation ;
- un galet de guidage de la pince, coopérant avec le premier chemin de came pour écarter ou rapprocher la pince du support en fonction de la position angulaire du bras extensible autour de l'axe principal de rotation, et
- un galet d'orientation de la pince, coopérant avec le deuxième chemin de came pour orienter la pince dans le plan transversal, en fonction de la position angulaire du bras extensible autour de l'axe principal de rotation.

Dans cette unité de transfert, le galet de guidage et le galet d'orientation sont montés sur une bielle elle-même montée à rotation sur le bras.

Une biellette assure la liaison entre la pince et le galet d'orientation afin de permettre le guidage en rotation de la pince par rapport au bras et ainsi sa bonne orientation dans le plan transversal.

Pour résumer FR 2 802 191 A divulgue une unité de convoyage d'articles entre une première zone et une deuxième zone, l'unité de convoyage comprenant :- un bâti portant un premier chemin de came et un deuxième chemin de came montés l'un au-dessus de l'autre,- un support monté à rotation sur le bâti selon un axe principal de rotation,- au moins un dispositif de transfert d'articles, monté sur le support,chaque dispositif de transfert comprenant :- un bras de type extensible, ayant une partie proximale fixée sur le support et une partie distale mobile par rapport à la partie proximale, dans un plan transversal à l'axe principal de rotation ;- une pince montée sur la partie distale du bras ;- un galet de guidage coopérant avec le premier chemin de came pour écarter ou rapprocher la pince du support, et- un galet d'orientation de la pince, coopérant avec le deuxième chemin de came pour orienter la pince dans le plan transversal, l'unité de convoyage comprenant en outre un cavalier portant le galet de guidage et le galet d'orientation, le cavalier étant monté à rotation sur le bras au moyen d'une bielette selon un axe secondaire de rotation parallèle à l'axe principal de rotation, pour permettre la rotation de la pince sur le bras; le galet de guidage et le galet d'orientation sont positionnés de part et d'autre du bras,et le cavalier est pivotant sur le bras depuis :- une configuration d'extension du bras, dans laquelle le galet d'orientation ou le galet de guidage est radialement plus excentré de l'axe principal de rotation, et repousse respectivement le galet de guidage ou le galet d'orientation en appui contre le premier chemin de came ou le deuxième chemin de came respectivement, par pivotement du cavalier autour de l'axe secondaire de rotation, à- une configuration de raccourcissement du bras, dans laquelle le galet de guidage ou le galet d'orientation est radialement plus excentré de l'axe principal de rotation, et repousse respectivement le galet d'orientation ou le galet de guidage en appui contre le deuxième chemin de came ou le premier chemin de came respectivement par pivotement du cavalier autour de l'axe secondaire de rotation.

En pratique, une telle architecture présente un inconvénient majeur en termes de maintenance.

En effet, l'utilisation de la bielle et de la biellette présente des risques d'usure prématurée du dispositif de transfert. Cela s'explique par le fait que la bielle et la biellette sont des pièces mobiles par rapport au bras et à la pince. Ainsi, à cause de leurs mouvements répétés, la bielle et la biellette frottent contre le bras et/ou la pince et s'usent.

Par ailleurs, la présence de la biellette augmente le poids du dispositif de transfert ce qui bride la vitesse maximale d'utilisation de transfert d'articles par l'unité de convoyage.

De plus, en cas de casse de la biellette le bras se trouve alors dans son extension maximale et la pince peut alors se détériorer en venant buter contre des éléments environnants, les dégradant également.

Une maintenance régulière de ces unités de transfert doit donc être prévue de sorte à vérifier l'état des dispositifs de préhension et en remplacer leurs composants défectueux le cas échéant.

Une telle maintenance requiert alors un arrêt complet de l'unité de transfert, ce qui a pour conséquence un arrêt de la production d'articles.

Pour limiter le temps d'arrêt de la production pour la maintenance des dispositifs de transfert, une autre architecture a été développée.

Dans cette autre architecture, la bielle et la biellette sont supprimées. Le galet de guidage est alors monté à rotation sur la pince coaxialement avec l'axe secondaire de rotation. Le galet d'orientation est, quant à lui, monté à rotation sur un doigt solidaire de la pince.

La pince présente, en outre, une potence de laquelle est solidaire un ressort formant liaison entre la pince et le support pour plaquer le galet de positionnement contre le deuxième chemin de came.

Toutefois, à l'instar de la bielle et de la biellette, le ressort est une pièce d'usure qui s'étire et se contracte de nombreuses fois au cours de l'utilisation de l'unité de transfert.

Ainsi, bien que la maintenance ne soit limitée qu'à une unique pièce (le ressort), elle n'en reste pas moins fréquente et régulière, ce qui pénalise toujours les cadences de production d'articles.

L'invention a notamment pour objectif de palier les inconvénients de l'art antérieur.

Plus précisément, l'invention a pour objectif de proposer une solution permettant de réduire le besoin de maintenance des dispositifs de transfert à bras extensible pour unités de convoyage d'articles comparativement aux dispositifs de l'art antérieur.

L'invention a également pour objectif de fournir une telle solution qui soit simple de conception et de maintenance.

L'invention a en outre pour objectif de fournir une telle solution qui permette un changement rapide de la pince en fonction des articles à transférer.

Ces objectifs, ainsi que d'autres qui apparaîtront par la suite, sont atteints grâce à l'invention qui a pour objet une unité de convoyage d'articles selon la revendication 1.

Le positionnement des galets de part et d'autre des bras permet de compenser les efforts fournis par chacun des galets sur le chemin de came sur lequel il circule et ainsi d'assurer à la fois le guidage et l'orientation de la pince.

Par ailleurs, le positionnement des galets de part et d'autre du bras permet d'éviter que la pince ne puisse pivoter à 360° par rapport au bras, ce qui pourrait l'endommager ou endommager toute autre partie de l'unité de convoyage dans laquelle la pince viendrait buter.

La maintenance de l'unité de convoyage selon l'invention est par ailleurs aisée puisque le nombre de pièces d'usure est limité comparativement à l'unité de convoyage selon l'art antérieur. Cela s'explique notamment par la suppression de ressorts qui sont des pièces pouvant présenter une usure rapide durant leur utilisation, à force de leurs extensions et rétrécissements successifs.

Par ailleurs, l'utilisation du cavalier et le positionnement du galet d'orientation et du galet de guidage de part et d'autre du bras permet que lorsque l'un des galets est repoussé radialement vers l'extérieur par le chemin de came sur lequel il circule, ledit galet repousse l'autre galet radialement vers l'intérieur pour le plaquer contre le chemin de came sur lequel il circule.

En d'autres termes, les deux galets sont en tout temps plaqués contre leur chemin de came respectif.

Selon un mode de réalisation avantageux, le cavalier présente une forme en V ayant une base par laquelle il est monté à rotation sur le bras, et deux ailes allant en s'évasant depuis la base en direction du bras, chacune des ailes portant à une extrémité libre l'un du galet de guidage et du galet d'orientation.

La forme en V du cavalier permet de favoriser le repoussement de l'un des galets contre son chemin de came lorsque l'autre des galets est repoussé radialement vers l'extérieur par le chemin de came sur lequel il circule.

Ainsi, cette forme en V favorise le contact de chacun des galets contre le chemin de came sur lequel il circule ce qui permet la bonne orientation et le bon guidage de la pince lors de l'utilisation de l'unité de convoyage.

En d'autres termes, la forme en V permet de décaler le point de pivotement de la pince sur le bras, ce qui facilite la rotation de la pince et donc améliore la venue en contact des galets contre leur chemin de came respectif.

De préférence, la partie proximale du bras est montée à rotation sur le support.

Le montage à rotation de la partie proximale du bras sur le support permet d'offrir un déplacement spatial étendu de la pince par rapport au bâti.

Plus précisément, le mouvement de la pince par rapport au bâti peut se faire dans le plan transversal tant en translation qu'en rotation.

La pince peut donc se déplacer selon un mouvement plan dans tout le plan transversal.

Avantageusement, la partie proximale du bras présente un doigt à l'extrémité duquel est monté à rotation un galet d'entraînement, le bâti présentant un troisième chemin de came dans lequel circule le galet d'entraînement pour entraîner en rotation le bras par rapport au support.

Le galet d'entraînement permet, par coopération avec le troisième chemin de came, de faire pivoter le bras par rapport au bâti et notamment par rapport au support. Cela maximise alors les déplacements de la pince dans le plan transversal en combinaison avec la coopération du galet de guidage et du galet d'orientation avec le premier chemin de came et le deuxième chemin de came respectivement.

Préférentiellement, la pince comprend deux mors dont un premier mors fixe et deuxième mors mobile par rapport au premier mors.

Une telle pince permet de saisir les articles de manière douce, c'est-à-dire sans risquer de les détériorer.

En effet, contrairement à des fourches, qui lorsqu'elles viennent se saisir d'un article peuvent les endommager par frottement, la mobilité du deuxième mors par rapport au premier mors permet d'assurer une ouverture de la pince puis une fermeture autour de l'article et ainsi d'éviter de l'endommager par frottement.

Pour cela, le deuxième mors comprend, de préférence, une patte à l'extrémité de laquelle est monté à rotation un galet de commande, le bâti portant un quatrième chemin de came sur lequel circule le galet de commande pour commander en déplacement le deuxième mors par rapport au premier mors.

La commande de l'ouverture de la pince et de sa fermeture à l'aide du galet de commande et du quatrième chemin de came permet d'assurer un pilotage mécanique de la pince, ce qui fiabilise l'unité de convoyage.

En effet, contrairement à un pilotage électronique de l'ouverture et de la fermeture de la pince, le pilotage mécanique permet de réduire les risques de défaillance électronique qui empêcheraient l'ouverture et la fermeture de la pince et provoqueraient alors un endommagement certain des articles lors du fonctionnement de l'unité de convoyage.

En outre, le pilotage électronique requiert l'ajout d'une alimentation électrique de chaque pince, ce qui complexifie l'unité de transfert et représente un coût important tant en conception et installation qu'en maintenance.

Avantageusement, l'unité de convoyage comprend au moins un secteur angulaire de rotation du support dans lequel le troisième chemin de came présente une portion en creux, et le premier chemin de came et le deuxième chemin de came présentent chacun une portion en crête, pour assurer un déplacement du bras avec le support et maintenir la pince dans une position constante ou quasiment par rapport au bâti.

Ce secteur angulaire est favorable notamment à la préhension des articles par la pince.

En effet, lorsqu'un article est saisi par la pince, il est préférable de réduire la vitesse de déplacement de la pince à proximité de l'article de sorte à ne pas endommager ce dernier.

Ainsi, malgré la rotation du support par rapport au bâti et donc le déplacement du bras avec le support, la pince peut rester dans un état stationnaire ou quasiment à proximité de l'article à prendre le temps de son ouverture et de sa fermeture, de sorte à favoriser la préhension sans risquer d'abîmer l'article.

Par la suite, la pince peut reprendre son déplacement pour transférer l'article depuis la première position jusqu'à la deuxième position.

Selon un aspect avantageux, pour chaque dispositif de transfert le bras est de type télescopique et le dispositif de transfert comprend des moyens de rappel intercalés entre la partie distale et la partie proximale du bras, les moyens de rappel tendant à rappeler la partie distale du bras vers la partie proximale.

Les moyens de rappel permettent de rapprocher la partie distale du bras de la partie proximale et donc du support.

Cela a pour effet de plaquer le cavalier de la pince contre le support et notamment de plaquer le galet d'orientation et le galet de guidage contre le premier chemin de came et le deuxième chemin de came respectivement.

Cela favorise alors le repoussement d'un galet contre son chemin de came lorsque l'autre galet est repoussé radialement vers l'extérieur.

En outre, cela permet, même lorsque l'un des galets est repoussé radialement vers l'extérieur et en cas de forte vitesse, de maintenir ledit galet contre le chemin de came sur lequel il circule.

Selon un autre aspect avantageux, la pince comprend un corps et une tête, la tête étant montée amovible sur le corps.

Le fait que la tête de la pince soit amovible par rapport au corps permet d'assurer un changement de pince en fonction des articles à convoyer.

En effet, une ligne de production n'étant pas obligatoirement destinée à produire un même produit de manière continue, il peut être nécessaire de changer la pince en fonction de l'article à convoyer.

Dès lors, le corps de la pince peut rester solidaire du bras tandis que la tête de la pince est changée.

Cela permet de réduire le temps de changement de pince et de faciliter le travail d'un opérateur puisque seule la tête de la pince est changée.

Par ailleurs, cela permet de réaliser le réglage de la pince avant son installation sur l'unité de transfert (c'est-à-dire de régler la pince en temps masqué), ce qui réduit le temps d'arrêt de production.

En outre, cela rend l'unité de convoyage moins coûteuse puisque seule une partie de la pince est changée, ce qui évite de devoir disposer d'un espace important pour le stockage des pinces, surtout lorsqu'une pluralité de pinces différentes doivent être stockées pour que la ligne de production puisse assurer la fabrication de différents modèles d'articles.

Pour cela, la pince comprend avantageusement un système de fixation rapide de la tête sur le corps, le système de fixation rapide incluant :
- une rainure trapézoïdale pratiquée dans le corps ;
- un organe pyramidal solidaire de la tête, à insérer dans la rainure trapézoïdale, et
- des moyens de butée de positionnement de l'organe pyramidal dans la rainure trapézoïdale.

Un tel système de fixation rapide permet un changement rapide des têtes de pinces lors des phases de changement de pince.

En outre, l'utilisation d'une rainure trapézoïdale et d'un organe pyramidal permet de limiter les jeux relatifs entre la tête et le corps de la pince.

Enfin, la présence des moyens de butée assure que la tête et le corps de la pince sont correctement positionnés l'un par rapport à l'autre. Cela permet d'éviter les risques d'endommagement de la pince et des articles lors de l'utilisation de l'unité de convoyage.

De préférence, les moyens de butée incluent :
- un ergot monté mobile dans une cage solidaire de l'un du corps et de la tête, l'ergot pouvant adopter une position de blocage dans laquelle il fait saillie hors de la cage ;
- une cavité pratiquée dans l'autre de la tête et du corps, dans laquelle est reçu l'ergot dans sa position de blocage,
- un organe de rappel monté dans la cage et repoussant l'ergot dans sa position de blocage.

De tels moyens de butée sont faciles d'utilisation et de maintenance.

En effet, lors de l'utilisation, le fait que l'ergo soit mobile dans la cage permet un repoussement aisé et un blocage relatif de la tête par rapport au corps grâce à l'organe de rappel, cela de manière automatique. Le déplacement de la tête par rapport au corps par translation est ainsi empêché, ce qui offre une sécurité et un indicateur de bon positionnement à l'opérateur lors du changement de tête de pince.

En effet, lorsque la tête est translatée par rapport au corps, elle repousse l'ergo dans la cage, ce dernier venant alors bloquer la tête par rapport au corps lorsqu'il rencontre la cavité.

Ainsi, l'ergo génère un effort à l'encontre de la translation ce qui permet de bloquer la tête par rapport au corps. Un appui soutenu de la part d'un opérateur pour faire translater la tête par rapport aux corps permet de repousser l'ergo dans la cage et d'autoriser le mouvement, c'est-à-dire la sortie de la tête par rapport au corps pour son changement.

Ainsi, lors de la phase de changement de pince, aucun outil n'est nécessaire pour désolidariser la tête de la pince de son corps, et l'opérateur est assisté, ou à tout le moins guidé, pour le positionnement de la tête sur le corps.

Avantageusement le système de fixation rapide comprend des moyens de serrage de la tête sur le corps, ces moyens de serrage incluant :
- une tige filetée traversant la tête ;
- une poignée solidaire de la tige filetée ;
- un écrou solidaire de l'organe pyramidal, et coopérant hélicoïdalement avec la tige filetée,
la rotation de la tige filetée, selon un premier sens, provoquant la translation de l'organe pyramidal dans le long de la tige filetée en direction de la poignée pour serrer la tête de la pince contre le corps.

De tels moyens de serrage permettent d'assurer la fixation de la tête sur le corps de la pince.

Plus particulièrement, ces moyens de serrage permettent de supprimer les jeux résiduels nécessaires au démontage de la pince et notamment au retrait de la tête par rapport au corps. Cela assure alors une bonne fiabilité lors de l'utilisation de l'unité de convoyage.

En outre, les risques d'endommagement de la pince à cause notamment des vibrations lors de l'utilisation de l'unité de convoyage sont limités, voire supprimés, grâce à la présence des moyens de serrage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] la figure 1 est une vue en perspective de dessus d'une unité de convoyage selon l'invention ;
[Fig. 2] la figure 2 est une vue schématique de dessus du support d'un bâti de l'unité de convoyage selon l'invention, le support présentant une pluralité de chemin de came ;
[Fig. 3] la figure 3 est une vue en perspective de dessus d'un détail de l'unité de convoyage selon l'invention, montrant un dispositif de préhension monté sur le support du bâti ;
[Fig. 4] la figure 4 est une vue de dessous d'une pince du dispositif de préhension de l'unité de convoyage selon l'invention ;
[Fig. 5] la figure 5 est une vue en perspective de dessus de la pince du dispositif de préhension de l'unité de convoyage selon l'invention ;
[Fig. 6] la figure 6 est une vue en perspective de dessus de la tête de la pince du dispositif de transfert de l'unité de convoyage selon l'invention ;
[Fig. 7] la figure 7 est une vue en perspective de dessus d'un corps de la pince du dispositif de transfert selon l'invention ou de l'unité de convoyage selon l'invention ;
[Fig. 8] la figure 8 est une vue de détail en coupe de moyens de butée de la pince du dispositif de transfert de l'unité de convoyage selon l'invention ;
[Fig. 9] la figure 9 est une vue de détail en coupe des moyens de serrage de la pince du dispositif de transfert de l'unité de convoyage selon l'invention.

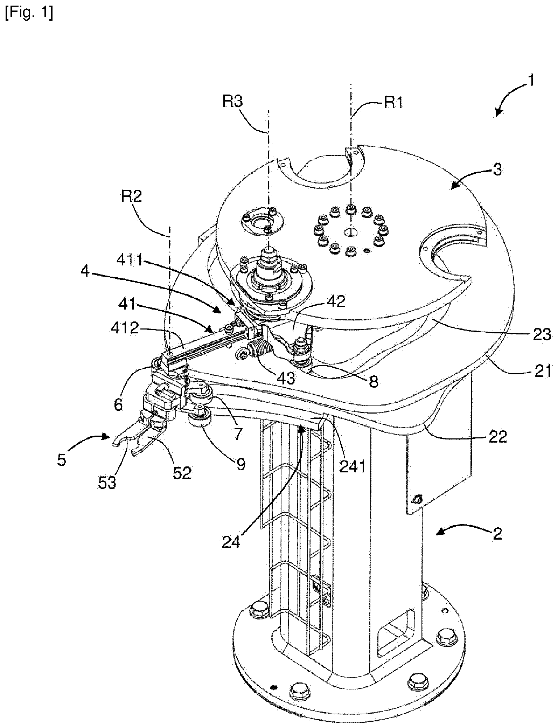

La figure 1 illustre une unité de convoyage 1 d'articles, selon l'invention.

L'unité de convoyage 1 a pour but de transférer des articles entre une première zone et une deuxième zone. Ce type de transfert est notamment utile pour que les articles puissent subir une étape de traitement dans la deuxième zone.

A titre d'exemple illustratif et non limitatif, les articles sont des préformes en matière plastique destinées à être transformées en récipients. La première zone intègre une unité de chauffe pour permettre de chauffer les préformes au-delà de la température de transition vitreuse de leur plastique constitutif, et la deuxième zone intègre une unité de soufflage dans laquelle les préformes préalablement chauffées sont introduites pour être soufflées et devenir des récipients à leur forme définitive.

Les articles doivent donc être saisis dans la première zone pour être déposés dans la deuxième zone.

Tel qu'illustré sur la figure 1, l'unité de convoyage 1 comprend :
- un bâti 2 ;
- un support 3 ;
- au moins un dispositif 4 de transfert.

Le bâti 2 se présente sous la forme d'une colonne et porte un premier chemin de came 21 et un deuxième chemin de came 22 montés l'un au-dessus de l'autre.

Le support 3 est monté à rotation sur le bâti 2 selon un axe principal de rotation R1.

Tel qu'on le voit sur la figure 1, le support 3 s'étend transversalement au bâti 2 et l'axe principal de rotation R1 s'étend sensiblement parallèlement à l'extension de la colonne formant le bâti 2.

Plus précisément, l'unité de convoyage 1 comprend au moins un dispositif 4 de transfert, et de préférence une pluralité de dispositifs 4 de transfert.

A des fins de clarté, la figure 1 n'illustre qu'un seul dispositif 4 de transfert.

Chaque dispositif 4 de transfert est monté sur le support 3, tel que cela est visible sur la figure 1.

Chaque dispositif 4 de transfert comprend :
- un bras 41 ;
- une pince 5 solidaire du bras 41 ;
- un galet de guidage 6, et
- un galet d'orientation 7.

La pince 5 est montée à rotation sur le bras 41 selon un axe secondaire de rotation R2. L'axe secondaire de rotation R2 est avantageusement parallèle à l'axe principal de rotation R1.

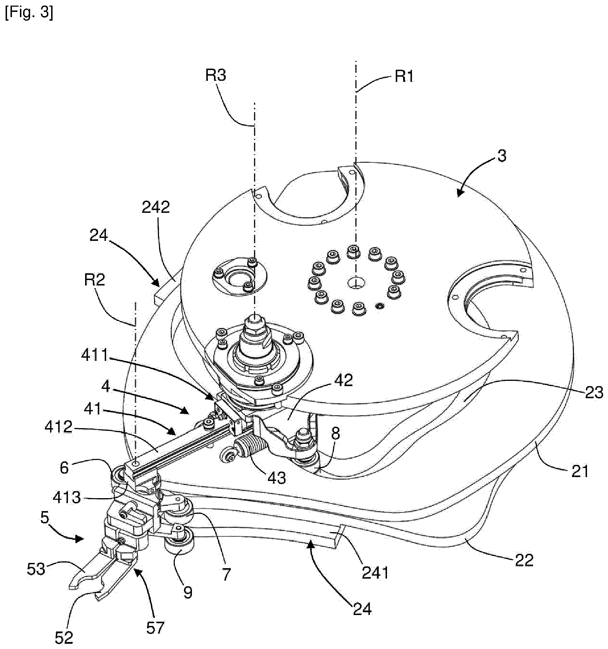

Tel que cela est visible sur la figure 3, le bras 41 est du type extensible et présente une partie proximale 411, fixée sur le support 3, et une partie distale 412 coulissante par rapport à la partie proximale 411 dans le plan transversal à l'axe principal de rotation R1.

Selon le mode de réalisation illustré sur les figures 1 et 3 et tel que décrit précédemment, le bras 41 est donc du type télescopique. Selon une variante de réalisation non illustrée, la partie proximale 411 et une la partie distale 412 sont montées à rotation l'une par rapport à l'autre, leur pivotement relatif permettant d'allonger ou de raccourcir le bras 41.

En référence aux figures 1 et 3, le galet de guidage 6 coopère avec le premier chemin de came 21 pour écarter ou rapprocher la pince 5 du support 3.

L'écartement ou le rapprochement de la pince 5 par rapport au support 3 est notamment rendu possible grâce au fait que le bras 41 est du type extensible.

Le galet d'orientation 7 coopère, quant à lui, avec le deuxième chemin de came 22 pour orienter la pince 5 dans le plan transversal.

Tel qu'illustré sur la figure 1, le premier chemin de came 21 est situé au-dessus du deuxième chemin de came 22. Une variante dans laquelle le premier chemin de came 21 est situé en-dessous du deuxième chemin de came 22 est cependant possible.

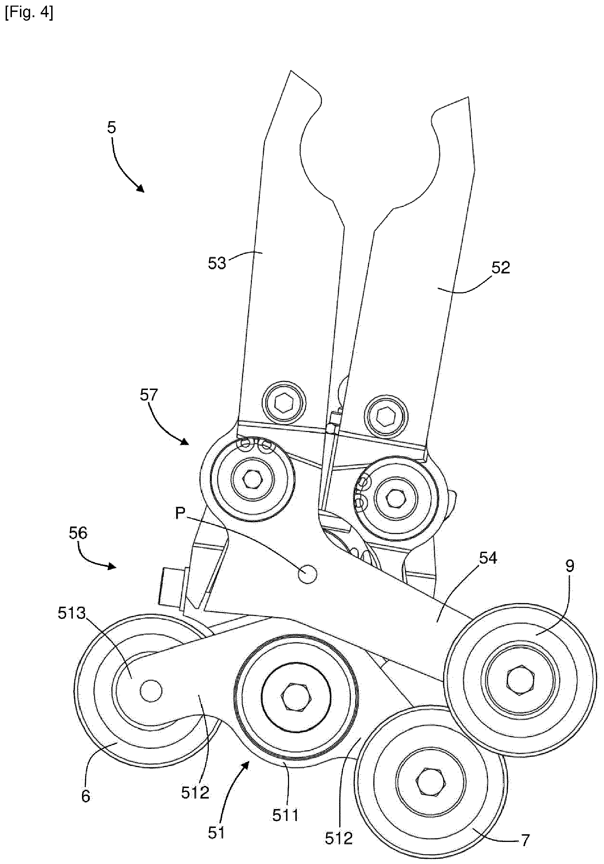

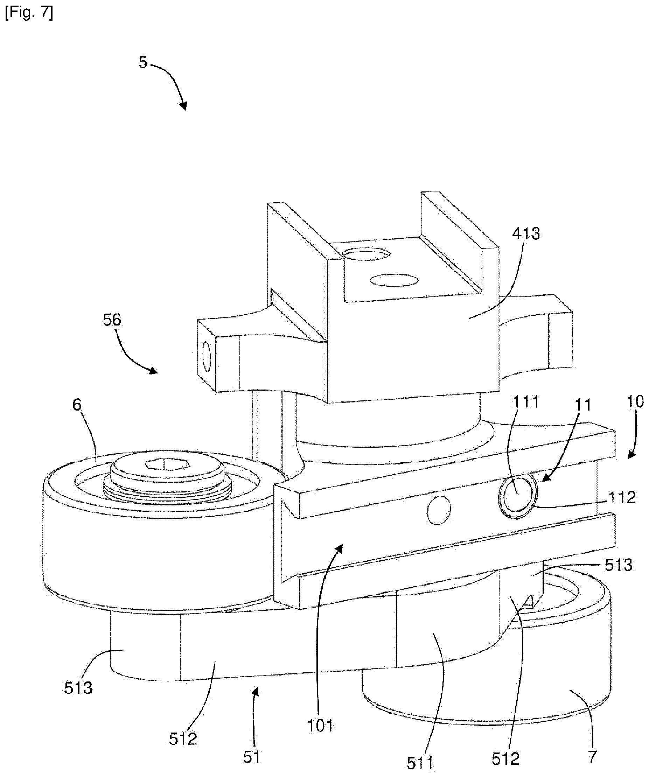

En référence aux figures 4, 5, 6 et 7, la pince 5 est à présent décrite.

La pince 5 présente un cavalier 51 portant le galet de guidage 6 et le galet d'orientation 7.

Le cavalier 51 est monté à rotation sur le bras 41 selon l'axe secondaire de rotation R2.

La pince 5 est ainsi montée à rotation par l'intermédiaire du cavalier 51 sur le bras 41. Plus particulièrement, la pince est montée à rotation sur la partie distale 412 du bras 41.

En référence à la figure 4, le cavalier 51 présente une forme en V ayant une base 511, par laquelle il est monté à rotation sur le bras 41, et deux ailes 512 allant en s'évasant depuis la base en direction du bras 41.

Chaque aile 512 présente une extrémité libre 513 à laquelle est monté à rotation l'un du galet de guidage 6 et du galet d'orientation 7.

Ainsi, comme cela est visible sur les figures 1 et 3, le galet de guidage 6 et le galet d'orientation 7 sont positionnés de part et d'autre du bras 41.

Le cavalier 51 est pivotant sur le bras 41 depuis une configuration d'extension du bras 41 tel qu'illustré notamment sur les figures 1 et 3, jusqu'à une configuration de raccourcissement du bras 41 (non illustrée sur les figures).

Dans la configuration d'extension du bras 41, le galet d'orientation 7 ou le galet de guidage 6 est radialement plus excentré de l'axe principal de rotation R1 et repousse respectivement le galet du guidage 6 ou le galet d'orientation 7 en appui contre le premier chemin de came 21 ou le deuxième chemin de came 22 respectivement.

Ce repoussement de l'un des galets par l'autre des galets est assuré par pivotement du cavalier 51 autour de l'axe secondaire de rotation R2.

Dans la configuration de raccourcissement du bras 41, le galet de guidage 6 ou le galet d'orientation 7 est radialement plus excentré de l'axe principal de rotation R1 et repousse respectivement le galet d'orientation 7 ou le galet de guidage 6 en appui contre le deuxième chemin de came 22 ou le premier chemin de came respectivement.

Ce repoussement de l'un des galets par l'autre des galets est assuré par pivotement du cavalier 51 autour de l'axe secondaire de rotation R2.

Ainsi, grâce à la rotation du cavalier 51 sur le bras 41, lorsque l'un du galet de guidage 6 ou du galet d'orientation 7 est radialement plus excentré par rapport à l'axe principal de rotation R1, il repousse l'autre du galet d'orientation 7 et du galet de guidage 6 contre le chemin de came sur lequel il circule. L'excentration du galet de guidage 6 par rapport au galet d'orientation 7 (ou inversement) est dû notamment à la différence d'éloignement radial relatif, depuis l'axe principal de rotation R1, du premier chemin de came 21 par rapport au deuxième chemin de came 22.

Ainsi, le galet de guidage 6 et le galet d'orientation 7 sont en tout temps au contact de leur chemin de came respectif.

En référence aux figures 1 et 3, le bras 41 est monté à rotation sur le support 3.

Plus précisément, la partie proximale 411 du bras 41 est montée à rotation sur le support 3 selon un axe tertiaire de rotation R3.

Toujours en référence aux figures 1 et 3, la partie proximale 411 du bras 41 présente un doigt 42 à l'extrémité duquel est monté à rotation un galet d'entraînement 8 du bras 41.

Tel qu'illustré sur les figures 1, 2 et 3, le bâti 2 présente alors un troisième chemin de came 23 dans lequel circule le galet d'entraînement 8 pour entraîner en rotation le bras 41 par rapport au support 3, autour de l'axe tertiaire de rotation R3.

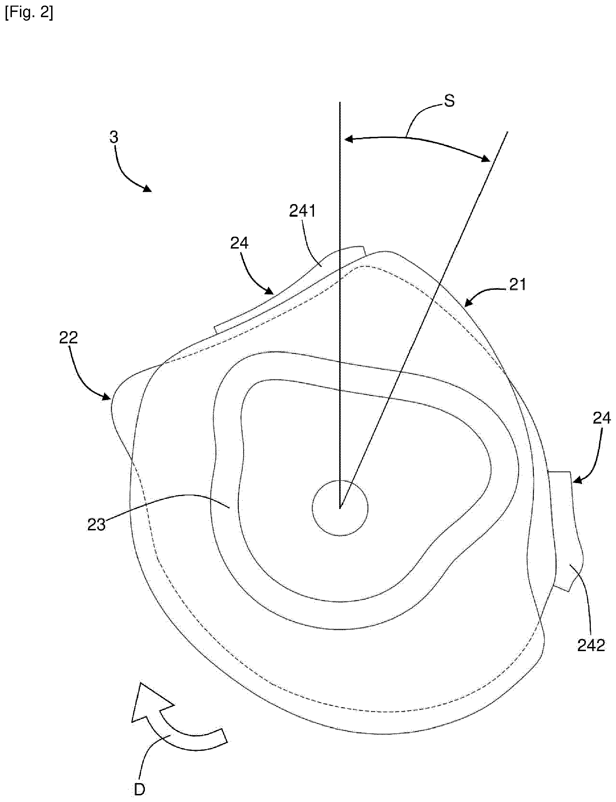

En référence à la figure 2, le troisième chemin de came 23 est radialement inscrit à l'intérieur du premier chemin de came 21 et du deuxième chemin de came 22.

Autrement dit, le premier chemin de came 21 et le deuxième chemin de came 33 entourent le troisième chemin de came 23.

Comme cela est représenté sur les figures 1 et 3, chaque dispositif 4 de transfert comprend des moyens de rappel 43 intercalés entre la partie distale 412 et la partie proximale 411 du bras 41.

Les moyens de rappel 43 tendent à rappeler la partie distale 412 du bras 41 vers la partie proximale 411.

Sur les figures 1 et 3, les moyens de rappel 43 sont illustrées dans un état de repos.

Plus précisément, les moyens de rappel 43 prennent la forme de ressorts de traction et sont représentés dans leur petite longueur. Il est entendu par petite longueur la longueur d'un ressort de traction lorsqu'il n'est pas soumis à un effort, et par grande longueur, la longueur d'un ressort de traction lorsqu'il est soumis à un effort, c'est-à-dire qu'il est étiré).

Les moyens de rappel 43 se raccordent à une pièce de liaison 413 solidaire de la pince 5.

Les moyens de rappel 43 tendent à recouvrer leur petite longueur lorsque le bras 41 est dans sa configuration d'extension. Dans la configuration d'extension du bras 41, les moyens de rappel 43 sont alors étirés, c'est-à-dire dans leur grande longueur, et tendent à rapprocher la pince 5, et donc le cavalier 51, en direction de l'axe principal de rotation R1.

Cela a notamment pour effet de plaquer chacun du galet de guidage 6 et du galet d'orientation 7 contre le premier chemin de came 21 et le deuxième chemin de came 22 respectivement.

Tel qu'on peut le constater sur les figures 1, 3 et 5, la liaison entre les moyens de rappel 43 et la pièce de liaison 413 est située radialement au-delà des axes de rotation du galet de guidage 6 et du galet d'orientation 7 par rapport l'axe principal de rotation R1.

Cela force donc la mise en contact du galet de guidage 6 et du galet d'orientation 7 avec le premier chemin de came 21 et le deuxième chemin de came 22, respectivement.

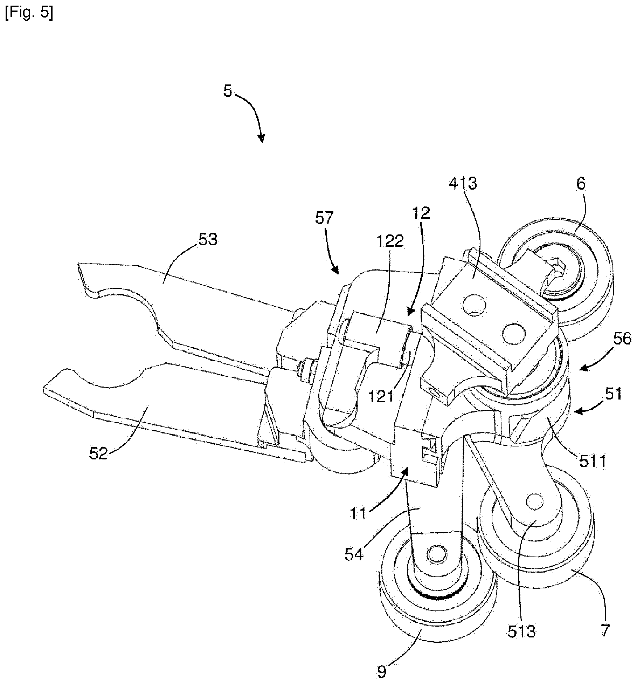

En référence aux figures 4 et 5, la pince 5 comprend deux mors 52, 53.

Plus particulièrement, la pince 5 comprend un premier mors 52 fixe et un deuxième mors 53 mobile par rapport au premier mors 52.

En référence à la figure 4, le deuxième mors 53 comprend une patte 54 à l'extrémité de laquelle est montée à rotation un galet de commande 9.

Le bâti 2 porte alors un quatrième chemin de came 24 tel qu'illustré sur les figures 1, 2 et 3, sur lequel circule le galet de commande 9.

La coopération entre le galet de commande 9 et le quatrième chemin de came 24 permet de commander en déplacement le deuxième mors 53 par rapport au premier mors 52.

Plus particulièrement, le déplacement du deuxième mors 53 par rapport au premier mors 52 se fait par rotation.

Le deuxième mors 53 est ainsi monté à rotation sur le premier mors 52 par une liaison pivot P.

En référence à la figure 2, le quatrième chemin de came 24 est divisé en deux portions, à savoir une première portion 241 et une deuxième portion 242.

La première portion 241 peut correspondre à la position de la pince 5 au niveau de la première zone, par exemple pour la préhension d'un article, et la deuxième portion 242 peut correspondre à la position de la pince 5 au niveau de la deuxième zone, par exemple pour le relâchement d'un article.

En référence à la figure 2, l'unité de convoyage 1 comprend au moins un secteur angulaire S de rotation du support 3 dans lequel le troisième chemin de came 23 présente une portion en creux et le premier chemin de came 21 et le deuxième chemin de came 22 présentent chacun une portion en crête.

Cet agencement du premier chemin de came 21, du deuxième chemin de came 22 et du troisième chemin de came 23 permet d'assurer un déplacement du support 3 et du bras 41 tout en maintenant la pince 5 dans une position constante ou quasiment par rapport au bâti 2.

Ces secteurs angulaires S sont avantageusement positionnés dans des régions proches de la première zone et de la deuxième zone.

Plus particulièrement, selon le sens de déplacement D illustré sur la figure 2 des dispositifs 4 de transfert par rapport au bâti 2, chaque secteur angulaire S est positionné en amont de la première portion 241 ou de la deuxième portion 242 du quatrième chemin de came 24.

En effet, le galet de commande 9 de l'ouverture ou de la fermeture de la pince 5 étant positionné en aval du galet d'orientation 6 et du galet d'orientation 7 selon le sens de déplacement D, la pince 5 se retrouve alors dans un état stationnaire ou quasiment par rapport aux articles à prendre ou à déposer avec la commande de la pince située en aval selon le sens de déplacement D.

Ainsi, dans les secteurs angulaires S, la pince 5 reste quasiment dans une position constante, hormis un avancement ou un dégagement pour prendre ou relâcher un article, la commande d'ouverture ou de fermeture de la pince étant réalisée par la coopération en aval de ce secteur angulaire S du galet de commande 9 avec la première portion 241 ou la deuxième portion 242 du quatrième chemin de came 24.

Le premier chemin de came 21 et le deuxième chemin de came 22 sont notamment formés par la tranche d'un plateau. Ainsi, tel qu'illustré sur les figures 1 et 3, deux plateaux sont superposés pour définir chacun le premier chemin de came 21 et le deuxième chemin de came 22.

En référence aux figures 1 et 3, le troisième chemin de came est avantageusement réalisé par fraisage du plateau dont la tranche définit le premier chemin de came 21.

Enfin, le quatrième chemin de came, et plus précisément la première portion 241 et la deuxième portion 242 sont réalisées par des plaques dont le champ définit le quatrième chemin de came 24.

Selon une forme de réalisation, la pince 5 est maintenue dans un état normalement fermé par l'intermédiaire d'un élément de rappel 55.

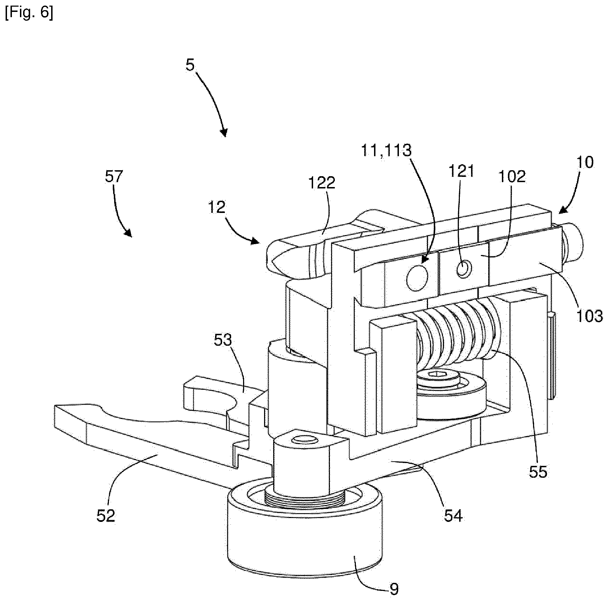

Plus particulièrement, en référence à la figure 6, la pince 5 comprend un élément de rappel 55 intercalé entre le premier mors 52 et le deuxième mors 53.

Lorsque la pince 5, par l'intermédiaire de la coopération entre le galet de commande 9 et le quatrième chemin de came 24 passe de sa position fermée à sa position ouverte, l'élément de rappel 55 est alors comprimé.

Lorsque la pince 5 doit être fermée, notamment pour la saisie d'un article ou lorsqu'il n'y a aucun article à transférer, le galet de commande 9 n'est alors plus en contact avec le quatrième chemin de came 24, ce qui provoque une extension de l'élément de rappel 55 qui tend à écarter le deuxième mors 53 par rapport au premier mors 52 pour faire pivoter le deuxième mors 53 par rapport au premier mors 52 et ainsi fermer la pince 5.

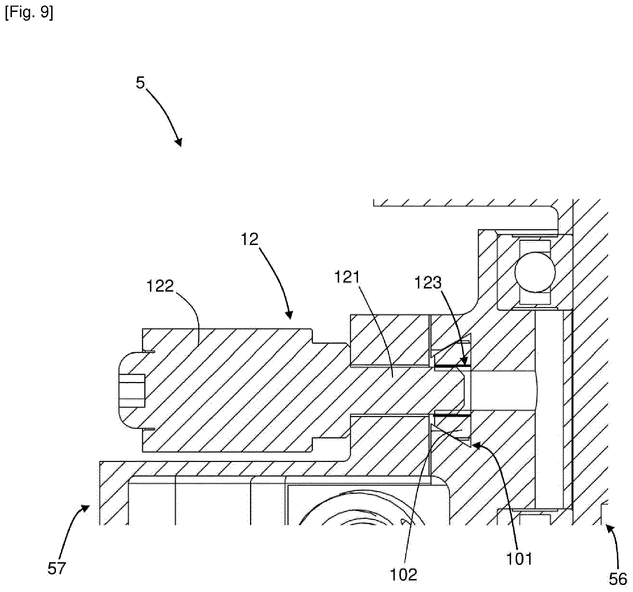

En référence aux figures 6, 7, 8 et 9, d'autres caractéristiques de la pince 5 sont à présent décrites.

La pince 5 comprend un corps 56 et une tête 57.

La tête 57 est avantageusement montée mobile sur le corps 56.

Cela permet de pouvoir changer la tête 57 de la pince 5 en fonction du type d'article à transférer, cela de manière simple et rapide comme expliqué ci-après.

Pour cela, la pince 5 comprend un système 10 de fixation rapide de la tête 57 sur le corps 56.

En référence aux figures 6, 7 et 8, le système 10 de fixation rapide inclut :
- une rainure trapézoïdale 101 est pratiquée dans le corps 56 ;
- un organe pyramidal 102 solidaire de la tête 57, à insérer dans la rainure trapézoïdale 101, et
- des moyens de butée 11 de positionnement de l'organe pyramidal 102 dans la rainure trapézoïdale 101.

En variante, la rainure trapézoïdale 101 peut être pratiquée sur la tête 57 et l'organe pyramidal 102 porté par le corps 56.

Les moyens de butée 11 incluent :
- un ergot 111 ;
- une cavité 113 ;
- et un organe de rappel 114.

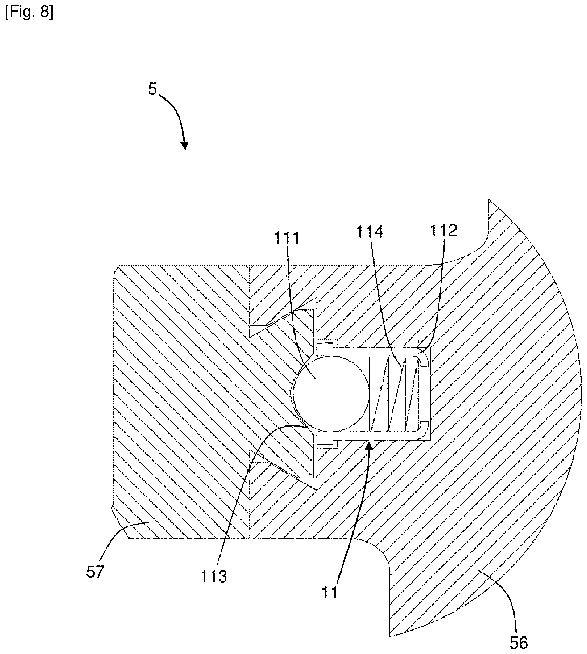

Plus particulièrement, en référence à la figure 8, l'ergot 111 est monté dans une cage 112 solidaire de l'un du corps 56 et de la tête 57.

L'ergot 111 peut adopter une position de blocage dans laquelle il fait saillie de la cage 112 tel qu'illustré sur la figure 8.

Selon une forme de réalisation avantageuse, l'ergot 111 prend la forme d'une bille.

La cavité 113 est pratiquée dans l'autre de la tête 57 et du corps 56 et est destinée à recevoir l'ergot 111 dans sa position de blocage.

Tel qu'illustré sur la figure 8, l'ergot 111 et la cage 112 sont solidaires du corps 56, et la cavité 113 est pratiquée dans la tête 57.

L'organe de rappel 114 est, comme illustré sur la figure 8, monté dans la cage 112 et repousse l'ergot 111 dans sa position de blocage.

L'organe de rappel 114 est par exemple un ressort de compression.

En outre, le système 10 de fixation rapide comprend des moyens de serrage 12 de la tête 57 sur le corps 56.

En référence aux figures 5, 6 et 9, les moyens de serrage 12 incluent :
- une tige 121 filetée traversant la tête 57 ;
- une poignée 122 solidaire de la tige 121 filetée, et
- un écrou 123 solidaire de l'organe pyramidal 102 et coopérant hélicoïdalement avec la tige 121 filetée.

L'écrou 123 est avantageusement noyé dans l'organe pyramidal 102.

La rotation de la tige 121 filetée, selon un premier sens, provoque la translation de l'organe pyramidal 102 le long de la tige 121 filetée en direction de la poignée 122. Cela a pour effet de serrer la tête 57 de la pince contre le corps 56.

Cela s'explique notamment par le fait que le rapprochement de l'organe pyramidal 102 de la poignée 122 provoque le déplacement de la tête 57 contre le corps 56 pour l'immobiliser.

Le montage d'une tête 57 sur le corps 56 se fait comme suit.

Dans un premier temps, un opérateur présente la saillie pyramidale 103 à l'intérieur de laquelle est situé l'organe pyramidal 102, en regard de la rainure 101 trapézoïdale.

L'opérateur fait alors coulisser la saillie pyramidale 103 à l'intérieur de la rainure 101 trapézoïdale, ce qui provoque le déplacement de l'ergot 111 à l'intérieur de la cage 112, l'ergot 111 frottant contre le fond de la rainure 101 trapézoïdale en tant repoussé par l'organe de rappel 114. L'opérateur fait alors glisser la tête 57 par rapport au corps 56 jusqu'à son cliquetage.

Plus particulièrement, l'opérateur fait translater la saillie pyramidale 103 à l'intérieur de la rainure 101 jusqu'à ce que l'ergot 111 soit en regard de la cavité 113.

A cet instant, l'organe de rappel 114 provoque la mise de l'ergot 111 dans sa position de blocage, c'est-à-dire en saillie au moins partielle de la cage 112, tel qu'illustré sur la figure 8.

A cet instant, la sortie de l'ergot 111 hors de la cage 112 provoque un arrêt de la translation de la saillie pyramidale 103 dans la rainure 101 trapézoïdale.

Un effort important de l'opérateur sur la tête 57 pour faire translater la saillie pyramidale 103 dans la rainure 101 trapézoïdale provoque la rentrée de l'ergot 111 dans la cage 112 à l'encontre de l'organe de rappel 114.

Cet effort important est notamment utile pour désengager la tête 57 hors du corps 56 afin de la remplacer.

L'opérateur peut ensuite serrer la tête 57 sur le corps 56 pour assurer l'immobilisation de la tête 57 par rapport au corps 56.

Pour cela, l'opérateur manipule la poignée 122 qui fait alors pivoter la tige filetée 121 et, par la coopération hélicoïdale entre l'écrou 123 noyé dans l'organe pyramidal 102 et la tige 121 filetée, rapproche l'organe pyramidal 102 en direction de la poignée 122. Les bords de la rainure 101 sont alors serrés entre l'organe pyramidal 102 et la tête 57 de la pince 5, ce qui assure l'immobilisation de la tête 57 par rapport au corps 56.

Le démontage de la tête 57 de la pince 5 par rapport au corps 56 se fait selon la procédure inverse.

## Revendications

1. Unité de convoyage (1) d'articles entre une première zone et une deuxième zone, l'unité de convoyage (1) comprenant :
- un bâti (2) portant un premier chemin de came (21) et un deuxième chemin de came (22) montés l'un au-dessus de l'autre,
- un support (3) monté à rotation sur le bâti (2) selon un axe principal de rotation (R1),
- au moins un dispositif (4) de transfert d'articles, monté sur le support (3),
chaque dispositif (4) de transfert comprenant :
- un bras (41) de type extensible, ayant une partie proximale (411) fixée sur le support (3) et une partie distale (412) mobile par rapport à la partie proximale (411), dans un plan transversal à l'axe principal de rotation (R1) ;
- une pince (5) montée sur la partie distale (412) du bras (41) ;
- un galet de guidage (6) coopérant avec le premier chemin de came (21) pour écarter ou rapprocher la pince (5) du support (3), et
- un galet d'orientation (7) de la pince (5), coopérant avec le deuxième chemin de came (22) pour orienter la pince (5) dans le plan transversal,
ladite pince (5) présente un cavalier (51) portant le galet de guidage (6) et le galet d'orientation (7), le cavalier (51) étant monté à rotation sur le bras (41) selon un axe secondaire de rotation (R2) parallèle à l'axe principal de rotation (R1), pour permettre la rotation de la pince sur le bras (41), et
le galet de guidage (6) et le galet d'orientation (7) sont positionnés de part et d'autre du bras (41), le cavalier (51) est pivotant sur le bras (41) depuis :
- une configuration d'extension du bras (41), dans laquelle le galet d'orientation (7) ou le galet de guidage (6) est radialement plus excentré de l'axe principal de rotation (R1), et repousse respectivement le galet de guidage (6) ou le galet d'orientation (7) en appui contre le premier chemin de came (21) ou le deuxième chemin de came (22) respectivement, par pivotement du cavalier (51) autour de l'axe secondaire de rotation (R2), à
- une configuration de raccourcissement du bras (41), dans laquelle le galet de guidage (6) ou le galet d'orientation (7) est radialement plus excentré de l'axe principal de rotation (R1), et repousse respectivement le galet d'orientation (7) ou le galet de guidage (6) en appui contre le deuxième chemin de came (22) ou le premier chemin de came (21) respectivement par pivotement du cavalier (51) autour de l'axe secondaire de rotation (R2).

2. Unité de convoyage (1) selon la revendication 1, **caractérisée en ce que** le cavalier (51) présente une forme en V ayant une base (511) par laquelle il est monté à rotation sur le bras (41), et deux ailes (512) allant en s'évasant depuis la base (511) en direction du bras (41), chacune des ailes (512) portant à une extrémité libre (513) l'un du galet de guidage (6) et du galet d'orientation (7).

3. Unité de convoyage (1) selon l'une quelconque des revendications précédentes, **caractérisée en ce que** la partie proximale (411) du bras (41) est montée à rotation sur le support 3.

4. Unité de convoyage (1) selon la revendication précédente, **caractérisée en ce que** la partie proximale (411) du bras (41) présente un doigt (42) à l'extrémité duquel est monté à rotation un galet d'entraînement (8), le bâti (2) présentant un troisième chemin de came (23) dans lequel circule le galet d'entraînement (8) pour entraîner en rotation le bras (41) par rapport au support (3).

5. Unité de convoyage (1) selon l'une quelconque des revendications précédentes, **caractérisée en ce que** la pince (5) comprend deux mors (52, 53) dont un premier mors (52) fixe et deuxième mors (53) mobile par rapport au premier mors (52).

6. Unité de convoyage (1) selon la revendication précédente, **caractérisée en ce que** le deuxième mors (53) comprend une patte (54) à l'extrémité de laquelle est monté à rotation un galet de commande (9), le bâti (2) portant un quatrième chemin de came (24) sur lequel circule le galet de commande (9) pour commander en déplacement le deuxième mors (53) par rapport au premier mors (52).

7. Unité de convoyage (1) selon la revendication précédente, **caractérisée en ce qu'**elle comprend au moins un secteur angulaire S de rotation du support (3) dans lequel le troisième chemin de came (23) présente une portion en creux, et le premier chemin de came (21) et le deuxième chemin de came (22) présentent chacun une portion en crête, pour assurer un déplacement du bras (41) avec le support (3) et maintenir la pince (5) dans une position constante ou quasiment par rapport au bâti (2).

8. Unité de convoyage (1) selon l'une quelconque des revendications précédentes, **caractérisée en ce que** pour chaque dispositif (4) de transfert le bras (41) est de type télescopique et le dispositif (4) de transfert comprend des moyens de rappel (43) intercalés entre la partie distale (412) et la partie proximale (411) du bras (41), les moyens de rappel (43) tendant à rappeler la partie distale (412) du bras (41) vers la partie proximale (411).

9. Unité de convoyage (1) selon l'une quelconque des revendications précédentes, **caractérisée en ce que** la pince (5) comprend un corps (56) et une tête (57), la tête (57) étant montée amovible sur le corps (56).

10. Unité de convoyage (1) selon la revendication précédente, **caractérisée en ce que** la pince (5) comprend un système (10) de fixation rapide de la tête (57) sur le corps (56), le système (10) de fixation rapide incluant :
- une rainure (101) trapézoïdale pratiquée dans le corps (56) ;
- un organe pyramidal (102) solidaire de la tête (57), à insérer dans la rainure trapézoïdale (101), et
- des moyens de butée (11) de positionnement de l'organe pyramidal (102) dans la rainure trapézoïdale (101).

11. Unité de convoyage (1) selon la revendication précédente, **caractérisée en ce que** les moyens de butée (11) incluent :
- un ergot (111) monté mobile dans une cage (112) solidaire de l'un du corps (56) et de la tête (57), l'ergot (111) pouvant adopter une position de blocage dans laquelle il fait saillie hors de la cage (112) ;
- une cavité (113) pratiquée dans l'autre de la tête (57) et du corps (56), dans laquelle est reçu l'ergot (111) dans sa position de blocage,
- un organe de rappel (114) monté dans la cage (112) et repoussant l'ergot (111) dans sa position de blocage.

12. Unité de convoyage (1) selon la revendication 10,
**caractérisée en ce que** le système (10) de fixation rapide comprend des moyens de serrage (12) de la tête (57) sur le corps (56), ces moyens de serrage (12) incluant :
- une tige (121) filetée traversant la tête (57) ;
- une poignée (122) solidaire de la tige (121) filetée ;
- un écrou (123) solidaire de l'organe pyramidal (102), et coopérant hélicoïdalement avec la tige (121) filetée,
la rotation de la tige (121) filetée, selon un premier sens, provoquant la translation de l'organe pyramidal (102) dans le long de la tige (121) filetée en direction de la poignée (122) pour serrer la tête (57) de la pince (5) contre le corps (56).

## Patentansprüche

1. Einheit (1) zum Fördern von Artikeln zwischen einem ersten Bereich und einem zweiten Bereich, wobei die Fördereinheit (1) Folgendes umfasst:
- ein Gestell (2), das eine erste Nockenbahn (21) und eine zweite Nockenbahn (22) trägt, die übereinander montiert sind,
- einen Träger (3), der um eine Hauptdrehachse (R1) drehbar am Gestell (2) montiert ist,
- mindestens eine Vorrichtung (4) zum Transferieren von Artikeln, die am Träger (3) montiert ist, wobei jede Transfervorrichtung (4) Folgendes umfasst:
- einen Arm (41) vom ausfahrbaren Typ, mit einem proximalen Abschnitt (411), der am Träger (3) befestigt ist, und einem distalen Abschnitt (412), der in Bezug auf den proximalen Abschnitt (411) in einer quer zur Hauptdrehachse (R1) verlaufenden Ebene bewegbar ist;
- einen Greifer (5), der an einem distalen Abschnitt (412) des Arms (41) montiert ist;
- eine Führungsrolle (6), die mit der ersten Nockenbahn (21) zusammenwirkt, um den Greifer (5) vom Träger (3) weg oder zu diesem hin zu bewegen, und
- eine Ausrichtungsrolle (7) des Greifers (5), die mit der zweiten Nockenbahn (22) zusammenwirkt, um den Greifer (5) in der quer verlaufenden Ebene auszurichten, wobei der Greifer (5) einen Reiter (51) aufweist, der die Führungsrolle (6) und die Ausrichtungsrolle (7) trägt, wobei der Reiter (51) um eine zur Hauptdrehachse (R1) parallele sekundäre Drehachse (R2) drehbar am Arm (41) montiert ist, um die Drehung des Greifers am Arm (41) zu ermöglichen, und wobei die Führungsrolle (6) und die Ausrichtungsrolle (7) auf beiden Seiten des Arms (41) positioniert sind, wobei der Reiter (51) am Arm (41) schwenkbar ist:
- aus einer verlängerten Konfiguration des Arms (41), in der die Ausrichtungsrolle (7) oder die Führungsrolle (6) von der Hauptdrehachse (R1) radial weiter exzentrisch angeordnet ist und die Führungsrolle (6) bzw. die Ausrichtungsrolle (7) in Anlage gegen die erste Nockenbahn (21) bzw. die zweite Nockenbahn (22) drückt, indem der Reiter (51) um die sekundäre Drehachse (R2) geschwenkt wird,
- in eine verkürzte Konfiguration des Arms (41), in der die Führungsrolle (6) oder die Ausrichtungsrolle (7) von der Hauptdrehachse (R1) radial weiter exzentrisch angeordnet ist und die Ausrichtungsrolle (7) bzw. die Führungsrolle (6) in Anlage gegen die zweite Nockenbahn (22) bzw. die erste Nockenbahn (21) drückt, indem der Reiter (51) um die sekundäre Drehachse (R2) geschwenkt wird.

2. Fördereinheit (1) nach Anspruch 1, **dadurch gekennzeichnet, dass** der Reiter (51) eine V-Form aufweist, mit einer Basis (511), über die er drehbar am Arm (41) montiert ist, und zwei Flügeln (512), die sich von der Basis (511) in Richtung des Arms (41) aufweiten, wobei jeder der Flügel (512) an einem freien Ende (513) eine der Führungsrolle (6) und der Ausrichtungsrolle (7) trägt.

3. Fördereinheit (1) nach einem der vorangehenden Ansprüche, **dadurch gekennzeichnet, dass** der proximale Abschnitt (411) des Arms (41) drehbar am Träger (3) montiert ist.

4. Fördereinheit (1) nach dem vorangehenden Anspruch, **dadurch gekennzeichnet, dass** der proximale Abschnitt (411) des Arms (41) einen Finger (42) aufweist, an dessen Ende eine Antriebsrolle (8) drehbar montiert ist, wobei das Gestell (2) eine dritte Nockenbahn (23) aufweist, in der die Antriebsrolle (8) läuft, um den Arm (41) in Bezug auf den Träger (3) in Drehung zu versetzen.

5. Fördereinheit (1) nach einem der vorangehenden Ansprüche, **dadurch gekennzeichnet, dass** der Greifer (5) zwei Backen (52, 53) umfasst, von denen eine erste Backe (52) feststehend und die zweite Backe (53) in Bezug auf die erste Backe (52) beweglich ist.

6. Fördereinheit (1) nach dem vorangehenden Anspruch, **dadurch gekennzeichnet, dass** die zweite Backe (53) eine Lasche (54) umfasst, an deren Ende eine Steuerrolle (9) drehbar montiert ist, wobei das Gestell (2) eine vierte Nockenbahn (24) trägt, auf der die Steuerrolle (9) läuft, um die Bewegung der zweiten Backe (53) in Bezug auf die erste Backe (52) zu steuern.

7. Fördereinheit (1) nach dem vorangehenden Anspruch, **dadurch gekennzeichnet, dass** sie mindestens einen Winkelsektor S der Drehung des Trägers (3) umfasst, in dem die dritte Nockenbahn (23) einen vertieften Abschnitt aufweist und die erste Nockenbahn (21) und die zweite Nockenbahn (22) jeweils einen Kammabschnitt aufweisen, um eine Bewegung des Arms (41) mit dem Träger (3) zu gewährleisten und den Greifer (5) in einer konstanten oder nahezu konstanten Position in Bezug auf das Gestell (2) zu halten.

8. Fördereinheit (1) nach einem der vorangehenden Ansprüche, **dadurch gekennzeichnet, dass** für jede Transfervorrichtung (4) der Arm (41) vom Teleskoptyp ist und die Transfervorrichtung (4) Vorspannmittel (43) umfasst, die zwischen dem distalen Abschnitt (412) und dem proximalen Abschnitt (411) des Arms (41) eingefügt sind, wobei die Vorspannmittel (43) dazu neigen, den distalen Abschnitt (412) des Arms (41) zum proximalen Abschnitt (411) hin vorzuspannen.

9. Fördereinheit (1) nach einem der vorangehenden Ansprüche, **dadurch gekennzeichnet, dass** der Greifer (5) einen Körper (56) und einen Kopf (57) umfasst, wobei der Kopf (57) abnehmbar am Körper (56) montiert ist.

10. Fördereinheit (1) nach dem vorangehenden Anspruch, **dadurch gekennzeichnet, dass** der Greifer (5) ein System (10) zur Schnellbefestigung des Kopfs (57) am Körper (56) umfasst, wobei das Schnellbefestigungssystem (10) Folgendes aufweist:
- eine trapezförmige Nut (101), die im Körper (56) vorgesehen ist;
- ein pyramidenförmiges Organ (102), das fest mit dem Kopf (57) verbunden und in die trapezförmige Nut (101) einzuführen ist, und
- Anschlagmittel (11) zur Positionierung des pyramidenförmigen Organs (102) in der trapezförmigen Nut (101).

11. Fördereinheit (1) nach dem vorangehenden Anspruch, **dadurch gekennzeichnet, dass** die Anschlagmittel (11) Folgendes aufweisen:
- einen Stift (111), der beweglich in einem Käfig (112) montiert ist, der fest mit einem des Körpers (56) und des Kopfes (57) verbunden ist, wobei der Stift (111) eine Blockierposition einnehmen kann, in der er aus dem Käfig (112) herausragt;
- einen Hohlraum (113), der in dem anderen des Kopfes (57) und des Körpers (56) aufgenommen ist, in dem der Stift (111) in seiner Blockierposition aufgenommen wird,
- ein Vorspannorgan (114), das im Käfig (112) montiert ist und den Stift (111) in seine Blockierposition drückt.

12. Fördereinheit (1) nach Anspruch 10,
**dadurch gekennzeichnet, dass** das Schnellbefestigungssystem (10) Mittel (12) zum Festklemmen des Kopfes (57) am Körper (56) umfasst, wobei die Festklemmmittel (12) Folgendes aufweisen:
- eine Gewindestange (121), die durch den Kopf (57) verläuft;
- einen Griff (122), der fest mit der Gewindestange (121) verbunden ist;
- eine Mutter (123), die fest mit dem pyramidenförmigen Organ (102) verbunden ist und schraubenartig mit der Gewindestange (121) zusammenwirkt,
wobei die Drehung der Gewindestange (121) in einer ersten Richtung die Bewegung des pyramidenförmigen Organs (102) entlang der Gewindestange (121) in Richtung des Griffs (122) bewirkt, um den Kopf (57) des Greifers (5) am Körper (56) festzuklemmen.

## Claims

1. Unit (1) for conveying articles between a first zone and a second zone, the conveying unit (1) comprising:
- a frame (2) bearing a first cam path (21) and a second cam path (22) mounted one on top of the other,
- a support (3) mounted to rotate on the frame (2) about a main axis of rotation (R1),
- at least one device (4) for transferring articles, mounted on the support (3),
each transfer device (4) comprising:
- an arm (41) of extendible type, having a proximal part (411) fixed onto the support (3) and a distal part (412) that is movable with respect to the proximal part (411), in a plane transversal to the main axis of rotation (R1);
- a clamp (5) mounted on the distal part (412) of the arm (41) ;
- a guiding roller (6) cooperating with the first cam path (21) to bring the clamp (5) away from or closer to the support (3), and
- an orientation roller (7) of the clamp (5), cooperating with the second cam path (22) to orient the clamp (5) in the transverse plane,
said clamp (5) having a rider (51) bearing the guiding roller (6) and the orientation roller (7), the rider (51) being mounted to rotate on the arm (41) about a secondary axis of rotation (R2) parallel to the main axis of rotation (R1), to allow the rotation of the clamp on the arm (41),
and the guiding roller (6) and the orientation roller (7) being positioned on either side of the arm (41),
the rider (51) pivoting on the arm (41) from:
- a configuration of extension of the arm (41), in which the orientation roller (7) or the guiding roller (6) is radially more off-centre from the main axis of rotation (R1), and respectively pushes back the guiding roller (6) or the orientation roller (7) bearing against the first cam path (21) or the second cam path (22) respectively, by the pivoting of the rider (51) about the secondary axis of rotation (R2), to
- a configuration of shortening of the arm (41), in which the guiding roller (6) or the orientation roller (7) is radially more off-centre from the main axis of rotation (R1), and respectively pushes back the orientation roller (7) or the guiding roller (6) bearing against the second cam path (22) or the first cam path (21) respectively by the pivoting of the rider (51) about the secondary axis of rotation (R2).

2. Conveying unit (1) according to Claim 1, **characterized in that** the rider (51) has a V shape with a base (511) by which it is mounted to rotate on the arm (41), and two wings (512) flaring away from the base (511) towards the arm (41), each of the wings (512) bearing, at a free end (513), one of the guiding roller (6) and the orientation roller (7).

3. Conveying unit (1) according to either one of the preceding claims, **characterized in that** the proximal part (411) of the arm (41) is mounted to rotate on the support (3) .

4. Conveying unit (1) according to the preceding claim, **characterized in that** the proximal part (411) of the arm (41) has a finger (42) at the end of which a drive roller (8) is mounted to rotate, the frame (2) having a third cam path (23) in which the drive roller (8) travels to drive the arm (41) in rotation with respect to the support (3) .

5. Conveying unit (1) according to any one of the preceding claims, **characterized in that** the clamp (5) comprises two jaws (52, 53), of which a first jaw (52) is fixed and a second jaw (53) is movable with respect to the first jaw (52).

6. Conveying unit (1) according to the preceding claim, **characterized in that** the second jaw (53) comprises a lug (54) at the end of which a control roller (9) is mounted to rotate, the frame (2) bearing a fourth cam path (24) on which the control roller (9) travels to control the second jaw (53) in displacement with respect to the first jaw (52).

7. Conveying unit (1) according to the preceding claim, **characterized in that** it comprises at least one angular segment S of rotation of the support (3) in which the third cam path (23) has a hollowed portion, and the first cam path (21) and the second cam path (22) each have a peaked portion, to ensure a displacement of the arm (41) with the support (3) and hold the clamp (5) in a constant or quasi-constant position with respect to the frame (2).

8. Conveying unit (1) according to any one of the preceding claims, **characterized in that**, for each transfer device (4), the arm (41) is of telescopic type and the transfer device (4) comprises return means (43) inserted between the distal part (412) and the proximal part (411) of the arm (41), the return means (43) tending to return the distal part (412) of the arm (41) towards the proximal part (411).

9. Conveying unit (1) according to any one of the preceding claims, **characterized in that** the clamp (5) comprises a body (56) and a head (57), the head (57) being removably mounted on the body (56).

10. Conveying unit (1) according to the preceding claim, **characterized in that** the clamp (5) comprises a rapid fixing system (10) for fixing the head (57) onto the body (56), the rapid fixing system (10) including:
- a trapezoidal groove (101) formed in the body (56);
- a pyramidal member (102) secured to the head (57), to be inserted into the trapezoidal groove (101), and
- stop means (11) for positioning the pyramidal member (102) in the trapezoidal groove (101).

11. Conveying unit (1) according to the preceding claim, **characterized in that** the stop means (11) include:
- a snug (111) mounted to be movable in a cage (112) secured to one of the body (56) and the head (57), the snug (111) being able to adopt a blocking position in which it protrudes out of the cage (112);
- a cavity (113) formed in the other of the head (57) and the body (56), in which the snug (111) is received in its blocking position,
- a return member (114) mounted in the cage (112) and pushing back the snug (111) in its blocking position.

12. Conveying unit (1) according to Claim 10, **characterized in that** the rapid fixing system (10) comprises tightening means (12) for tightening the head (57) on the body (56), these tightening means (12) including:
- a threaded rod (121) passing through the head (57);
- a handle (122) secured to the threaded rod (121);
- a nut (123) secured to the pyramidal member (102), and cooperating helically with the threaded rod (121),
the rotation of the threaded rod (121), in a first direction, provoking the translation of the pyramidal member (102) along the threaded rod (121) towards the handle (122) to tighten the head (57) of the clamp (5) against the body (56).
